(19) Europäisches Patentamt
European Patent Office
Office européen des brevets

(11) **EP 3 156 208 B1**

(12) **EUROPÄISCHE PATENTSCHRIFT**

(45) Veröffentlichungstag und Bekanntmachung des Hinweises auf die Patenterteilung:
**17.04.2019 Patentblatt 2019/16**

(21) Anmeldenummer: **15190201.2**

(22) Anmeldetag: **16.10.2015**

(51) Int Cl.:
*B29C 65/00* (2006.01)       *B29C 65/02* (2006.01)
*C08L 23/00* (2006.01)       *C08J 5/12* (2006.01)
*C08J 7/00* (2006.01)        *C09D 151/06* (2006.01)
*C09J 5/02* (2006.01)        *C09J 5/06* (2006.01)
*C08L 23/06* (2006.01)       *C09D 5/02* (2006.01)

(54) **VERFAHREN ZUM SCHWEISSEN VON ZWEI UNTERSCHIEDLICHEN POLYOLEFIN-KUNSTSTOFFEN MITTELS VERWENDUNG EINES PRIMERS, GEGENSTAND HERGESTELLT NACH DIESEM VERFAHREN**

METHOD FOR WELDING TWO DIFFERENT POLYOLEFIN PLASTICS BY MAKING USE OF A PRIMER, ARTICLE OBTAINABLE BY SAID METHOD

PROCÉDÉ DE SOUDAGE DE DEUX MATIÈRES PLASTIQUES DIFFÉRENTES À BASE DE POLYOLÉFINE FAISANT USAGE D'UN PRIMAIRE, ARTICLE OBTENU PAR CE PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**19.04.2017 Patentblatt 2017/16**

(73) Patentinhaber: **Henkel AG & Co. KGaA**
**40589 Düsseldorf (DE)**

(72) Erfinder:
• **WALTER, Pablo**
**80801 München (DE)**
• **FRIEDRICH, Norman**
**80636 München (DE)**
• **GONZALEZ, Lina**
**82008 München (DE)**
• **LÜTZEN, Hendrik**
**80637 München (DE)**
• **HÄRTIG, Thomas**
**80796 München (DE)**
• **KASPER, Dirk**
**40597 Düsseldorf (DE)**

(56) Entgegenhaltungen:
**GB-A- 2 082 502**

• **DATABASE CAPLUS [Online] CHEMICAL ABSTRACTS SERVICE, COLUMBUS, OHIO, US; 1985, Ube Industries, Ltd., Japan: "Manufacture of composite film", XP002756227, Database accession no. 1985 : 186357 -& JP S60 21249 A (UBE INDUSTRIES) 2. Februar 1985 (1985-02-02)**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**EP 3 156 208 B1**

## Beschreibung

Die vorliegende Erfindung bezieht sich auf ein Verfahren zum Verschweißen von zwei unterschiedlichen Polyolefin-Kunststoffen unter Verwendung eines Primers, wobei der Primer mindestens ein Maleinsäureanhydrid gepfropftes Polyolefin-Polymer enthält. Darüber hinaus betrifft die vorliegende Erfindung entsprechend verschweißte Produkte.

Aus dem Stand der Technik sind verschiedene Verfahren bekannt, um zwei oder mehrere Substrate, die aus Kunststoffen, wie zum Beispiel aus Polyethylen (PE), Polyacrylaten oder Polyamid (PA) bestehen, miteinander zu verbinden. Dabei gibt es sowohl mechanische Verbindungsmöglichkeiten, wie beispielsweise das Rasten oder Schrauben, oder Klebeverfahren. Alternativ dazu können Kunststoffe auch miteinander verschweißt werden. Beim Schweißen handelt es sich um ein Fügeverfahren für eine nicht lösbare, stofflich physikalische Verbindung im Allgemeinen artgleicher Kunststoffe, wie z.B. PE mit PE oder PA mit PA. Artgleiche thermoplastische Kunststoffe sind solche Polymere, die sich hinsichtlich ihrer Molekularstruktur, ihrer Schmelztemperatur, der Schmelzviskosität und ihres Wärmeausdehnungskoeffizienten nicht wesentlich unterscheiden und grundsätzlich bedingt miteinander mischbar sind. Meistens handelt sich es bei artgleichen Kunststoffen um Kunststoffe einer identischen Polymer-Molekularstruktur bzw. um identische Kunststoffe.

Es sind verschiedenste Verfahren bekannt, um zwei oder mehrere artgleiche Kunststoffe miteinander zu verschweißen. Dabei können unterschiedlichste Schweißverfahren eingesetzt werden, wie beispielsweise Infrarot-Schweißen, Infrarot/Vibrationsschweißen oder Ultraschallschweißen. Diese Verfahren zum Verschweißen von gleichartigen Kunststoffen basieren darauf, dass die jeweiligen Kunststoffe im Bereich der Schweißzone aufgeschmolzen werden und dass sich die Stoffe in dieser Zone stoff- und kraftschlüssig miteinander verbinden.

Diese Schweißverfahren funktionieren immer so lange gut, solange artgleiche Kunststoffe miteinander verbunden werden sollen. Sobald allerdings zwei Kunststoffe miteinander verschweißt werden sollen, die artungleich bzw. unverträglich miteinander sind, wie zum Beispiel Kunststoffe aus Polyamid und Poly(meth)acrylat, kann keine dauerhafte Verbindung mit hoher mechanischer Festigkeit zwischen den beiden Substraten hergestellt werden. Aber auch bei zueinander ähnlichen Kunststoffen, wie Polyethylen mit Polypropylen, kommt es häufig beim Verschweißen zu einer nicht ausreichenden Festigkeit in der Fügenaht.

Bisher konnten entsprechende unterschiedliche Kunststoffe lediglich durch eine mechanische Verbindung oder ein Klebeverfahren miteinander verbunden werden. Die Nachteile an einer mechanischen Verbindung sind die komplizierte Anbringung, die punktuelle Materialbelastung als auch die Notwendigkeit eines zusätzlichen mechanischen Verbindungsmittels. Des Weiteren können bei einer mechanischen Verbindung selten stoffschlüssige Verbindungen erreicht werden. Der Nachteil an einem Klebeverfahren ist jedoch, dass die Endfestigkeit der Verbindung erst nach einem langen Zeitraum, der bis zu mehreren Wochen betragen kann, erreicht wird. Des Weiteren erfordert das Verkleben von niederenergetischen Oberflächen meist eine aufwendige Vorbehandlung der Fügepartner. Zusätzlich ist eine Klebeverbindung häufig aufgrund der äußeren Witterung nicht unbegrenzt stabil. Außerdem ist die Bereitstellung einer sauberen Klebeverbindung häufig kompliziert und zeitaufwendig. Somit stellt die Verbindung mittels eines Schweißverfahrens für Kunststoffe die sauberste, schnellste und einfachste Lösung dar.

In der JP S60 21249 A wird ein Verfahren zur Herstellung einer Verbundfolie, bei dem auf eine Trägerschicht, bestehend aus Maleinsäureanhydrid (MAH) gepfropften Polyethylenen und MAH gepfropften Polypropylenen, zuerst von der einen Seite ein flüssiges PE aufgetragen wird und dann von der anderen Seite ein flüssiges PP.

Die Aufgabe der vorliegenden Erfindung bestand somit darin, ein einfaches Verfahren zum Verschweißen von zwei unterschiedlichen Polyolefin-Kunststoffen zu finden, welches hinsichtlich der Festigkeit der entstandenen Verbindung eine Verbesserung gegenüber dem Stand der Technik bietet. Dabei sollte die Verbindung zwischen diesen Kunststoffen durch die Schweißnaht möglichst stabil und von Dauer sein.

Überraschenderweise wurde gefunden, dass diese Aufgabe durch ein Verfahren zum Verschweißen von zwei unterschiedlichen Polyolefin-Kunststoffen unter Verwendung eines Primers gelöst wird, wobei der Primer mindestens ein Maleinsäureanhydrid gepfropftes Polyolefin-Polymer enthält.

Durch die Verwendung eines Primers enthaltend mindestens ein entsprechendes Copolymer konnten beim Verschweißen von zwei unterschiedlichen Polyolefin-Kunststoffen besonders stabile und alterungsbeständige Verbindungen zwischen den Polyolefin-Kunststoffen erhalten werden.

Die Fügepartner zum Verschweißen unter Verwendung eines erfindungsgemäßen Primers sind zwei unterschiedliche Polyolefin-Kunststoffe. Unter identischen Polyolefin-Kunstoffen werden zwei Polyolefine verstanden, die sich sowohl in ihrem polymeren Aufbau als auch in der Art des Füllstoffs nicht unterscheiden. Geeignete Polyolefin-Kunststoffe sind insbesondere thermoplastische Polyolefin-Kunststoffe. Ein Polyolefin-Kunststoff basiert auf polyolefinischen Polymeren, wie Homo- und Copolymere von alpha-Olefinen. Die polyolefinischen Polymere können ausgewählt werden aus der Gruppe bestehend aus Poly-alpha-Olefin-Homopolymeren auf Basis von Ethylen, Propylen und/oder Butylen, insbesondere Homopolymere aus Ethylen oder Propylen, und Poly-alpha-Olefin-Copolymere auf Basis von Ethen, Propen, 1-Buten, 1-Hexen und 1-Octen, insbesondere Ethylen/alpha-Olefin- und Propylen/alpha-Olefin-Copolymere, vorzugsweise Copolymere von Ethen oder Propen mit 1-Buten, 1-Hexen, 1-Octen, oder einer Kombination davon.

Insbesondere sind die Polyolefin-Kunststoffe ausgewählt aus Polyethylen- (insbesondere high-density/HD-Polyethylen-, medium-density/MD-Polyethylen-, low-density/LD-Polyethylen-, ultra high molecular weight/UHMW-Polyethylen- und linear low-density/LLD-Polyethylen-) und Polypropylen-Kunststoffen. Besonders bevorzugt ist der erste Fügepartner ein Polyethylen-Kunststoff, insbesondere HD-Polyethylen-, MD-Polyethylen-, LD-Polyethylen-, UHMW-Polyethylen- oder LLD-Polyethylen-Kunststoff, vorzugsweise ein HD-Polyethylen-, MD-Polyethylen- oder LD-Polyethylen-Kunststoff, und der zweite Fügepartner ein Polypropylen-Kunststoff. Somit ist es bevorzugt einen Polyethylen-Kunststoff mit einem Polypropylen-Kunststoff unter Verwendung des erfindungsgemäßen Primers zu verschweißen. Bei einem Polyethylen-Kunststoff ist dieser besonders bevorzugt auf Ethylen basiert, insbesondere wurde das Polyethylen-Polymer zu mehr als 50 Gew.-%, insbesondere zu mehr als 70 Gew.-%, bevorzugt zu mehr als 90 Gew.-%, besonders bevorzugt zu 100 Gew.-% aus Ethylen hergestellt.

Vorzugsweise haben die Polyolefin-Polymere, insbesondere Polyethylen- und/oder Polypropylen-Polymere, eine gewichtsmittlere Molmasse (Gewichtsmittel Mw) von größer 10000 g/mol, insbesondere größer 20000 g/mol, bevorzugt größer 50000 g/mol. Vorzugsweise weisen die Polyolefin-Polymere, insbesondere Polyethylen- und/oder Polypropylen-Polymere eine gewichtsmittlere Molmasse (Gewichtsmittel Mw) von kleiner 2000000 g/mol, insbesondere kleiner 1000000 g/mol, bevorzugt kleiner 500000 g/mol auf. Besonders bevorzugte Polyolefin-Polymere, insbesondere Polyethylen- und/oder Polypropylen-Polymere haben gewichtsmittlere Molmassen (Gewichtsmittel Mw) von 50000 g/mol bis 250000 g/mol. Besonders bevorzugte Polyethylen-Polymere weisen eine gewichtsmittlere Molmasse (Gewichtsmittel Mw) von 50000 g/mol bis 1000000 g/mol, insbesondere von 200000 g/mol bis 500000 g/mol auf. Andere bevorzugte Polyethylen-Polymere (UHMW-PE-Polymere) weisen eine gewichtsmittlere Molmasse von größer 2000000 g/mol, insbesondere von 4000000 - 6000000 g/mol auf.

Die Polyolefin-Kunststoffe, insbesondere Polyethylen- und/oder Polypropylen-Kunststoffe können auch weitere Komponenten enthalten, z.B. Füllstoffe, wie Glasfasern, Pigmente, Farbstoffe, Rheologiehilfsmittel, Entformungshilfen oder Stabilisatoren. Bevorzugt besteht der Polyolefin-Kunststoff, insbesondere Polyethylen- und/oder Polypropylen-Kunststoff zu mehr als 80 Gew.-%, insbesondere zu mehr als 90 Gew.-%, bevorzugt zu mehr als 98 Gew.-% aus den genannten Polyolefin-Polymeren, insbesondere den genannten Polyethylen- und/oder Polypropylen-Polymeren, jeweils bezogen auf den Polymeranteil des Polyolefin-Kunststoffes (Gesamt Polyolefin-Kunststoff ohne Füllstoffe). Vorzugsweise besteht der Polyolefin-Kunststoff zu mehr als 50 Gew.-%, insbesondere zu mehr als 70 Gew.-%, vorzugsweise zu mehr als 90 Gew.-%, bevorzugt zu mehr als 95 Gew.-%, besonders bevorzugt zu mehr als 98 Gew.-% aus den genannten Polyolefin-Polymeren, insbesondere dem Polyethylen und/oder Polypropylen, jeweils bezogen auf den gesamten Polyolefin-Kunststoff (mit Füllstoffen).

Ein weiterer wesentlicher Bestandteil der Erfindung ist die Verwendung mindestens eines Primers, vorzugsweise genau eines Primers. Der Primer enthält mindestens ein Maleinsäureanhydrid gepfropftes Polyolefin-Polymer.

Der Primer stellt ein Schweißhilfsmittel dar, welches vorzugsweise als eine Vorbehandlungsschicht auf mindestens einem der zu verschweißenden Oberflächen der Substrate im Bereich der Fügezone aufgetragen wird. Der Primer ist nicht als Klebstoff, Reinigungsmittel oder ähnliches zu verstehen, vielmehr ist der Primer ein Hilfsmittel zum Schweißen, wodurch die Fügepartner in der Fügezone (bzw. Schweißzone) kompatibel zueinander gemacht werden und so in der Fügezone beim Fügen eine stoff- und kraftschlüssige Verbindung zwischen den zu verschweißenden Substraten entsteht.

Die Versuche haben gezeigt, dass durch die Verwendung eines entsprechenden Primers, enthaltend ein erfindungsgemäßes Polymer, die zu fügenden Kunststoffe beim Schweißen in der Fügenaht kompatibilisiert werden konnten und somit eine stabile und dauerhafte Verbindung erzielt werden kann. Ohne die Verwendung eines entsprechenden Primers konnten nur geringere Festigkeiten der geschweißten Verbindung erzielt werden. Vorzugsweise weisen die gefügten Substrate eine Zugfestigkeit von mehr als 12 MPa, insbesondere mehr als 15 MPa auf. Zugfestigkeit wird mittels einer Zuggeschwindigkeit von 50 mm/s gemäß der in den Versuchen beschriebenen Versuchsdurchführung bestimmt.

Der Primer enthält mindestens ein Maleinsäureanhydrid gepfropftes Polyolefin, welches insbesondere ausgewählt wird aus Maleinsäureanhydrid gepfropften Polyethylenen oder Maleinsäureanhydrid gepfropften Polypropylenen. Dabei kann das Polyolefin mit einem Maleinsäureanhydrid bzw. Maleinsäureanhydrid-Derivat, insbesondere Maleinsäureanhydrid gepfropft sein. Ein Beispiel für ein Maleinsäureanhydrid-Derivat ist 1,2,3,6-Tetrahydrophthalsäureanhydrid, welches die relevante 5-gliedige Anhydrid-Gruppe umfasst. Bevorzugt enthält der Primer eine Mischung von Maleinsäureanhydrid gepfropften Polyolefinen. Dabei kann die Mischung zwei oder mehrere, bevorzugt zwei unterschiedliche Maleinsäureanhydrid gepfropfte Polyolefin-Polymere enthalten. Unter unterschiedlichen Maleinsäureanhydrid gepfropften Polyolefin-Polymeren versteht der Fachmann zwei Polymere, die sich in ihrer Molekularstruktur, z.B. bezüglich dem Molekulargewicht oder der monomere Zusammensetzung, unterscheiden. Bevorzugt enthält der Primer eine Mischung aus mindestens einem Maleinsäureanhydrid gepfropften Polyethylen und mindestens einem Maleinsäureanhydrid gepfropften Polypropylen. Das Verhältnis der unterschiedlichen Maleinsäureanhydrid gepfropften Polyolefin-Polymere, insbesondere das Verhältnis von Maleinsäureanhydrid gepfropften Polyethylen zu Maleinsäureanhydrid gepfropften Polypropylen, ist 0,2:1 bis 20:1, insbesondere 0,5:1 bis 10:1, bevorzugt 1:1 bis 5:1, besonders bevorzugt 1,5:1 bis 3:1.

Die Polymere können in bekannter Weise synthetisiert werden. Dabei könnten die Polyolefin-Polymere auch geringe Mengen an nicht alpha-Olefin-Monomeren, wie Styrol oder Acrylaten, enthalten. Vorzugsweise sind die Polyolefin-Polymere keine Blockcopolymere. Insbesondere enthalten die Polyolefine weniger als 10 Gew.-%, vorzugsweise weniger als 2 Gew.-%, bevorzugt weniger als 1 Gew.-%, besonders bevorzugt keine Monomere ausgewählt aus Styrol und Acrylaten, insbesondere nicht alpha-Olefin-Monomere. Zusätzlich könnten die Polymere auch in einer Polymeranalogen Reaktion weiter gepfropft sein. Besonders bevorzugte Reaktionspartner zum Pfropfen sind Alkohole, Thiole, Amine, Isocyanate, Anhydride, Carbonsäuren, insbesondere Alkohole, bevorzugt Alkohole mit 1 bis 6 Kohlenstoffatomen, wie Methanol und Isobutanol. Zum Pfropfen können die Maleinsäureanhydrid-Monomere bzw. Maleinsäureanhydrid-Einheiten im Polymer mit dem Reaktionspartner reagieren, insbesondere durch Alkohole oder durch Amine. Insbesondere können die Polymere auch weiter mit Maleinsäureanhydrid gepfropft werden, um den Maleinsäureanhydrid-Gehalt weiter zu erhöhen. Insbesondere bei Mischungen von Polyolefinen, insbesondere von Polyethylen und Polypropylen, können diese weiter gepfropft werden, insbesondere mit Aminen, vorzugsweise Diaminen, um diese miteinander zu verbinden. Vorzugsweise reagieren die Maleinsäureanhydrid-Gruppen nur partiell, insbesondere weniger als 90 mol%, bevorzugt weniger als 70 mol% der Maleinsäureanhydrid-Gruppen. Vorzugsweise werden die Maleinsäureanhydrid Gruppen partiell mit Aminen, insbesondere aliphatischen Aminen, bevorzugt aliphatischen Diaminen, wie Hexamethylendiamin umgesetzt. Bevorzugt werden 5-100 mol%, insbesondere 10-80 mol%, bevorzugt 20-70 mol% der Maleinsäureanhydrid-Gruppen des erfindungsgemäßen Polymeres, insbesondere der Maleinsäureanhydrid-Gruppen einer Mischung von Maleinsäureanhydrid gepfropften Polyolefin-Polymeren mit Aminen umgesetzt.

In einer anderen bevorzugten Ausführungsform werden die Maleinsäureanhydrid-Gruppen nicht umgesetzt und liegen weiterhin als Anhydrid Gruppen vor. In der bevorzugten Ausführung können die Maleinsäureanhydrid-Gruppen auch teilweise hydrolysiert vorliegen. Eine komplette Umsetzung der Maleinsäureanhydrid-Gruppen kann zu einer Verminderung der Festigkeit der resultierenden Schweißverbindung führen.

Besonders vorteilhaft sind Polymere, insbesondere Mischungen von Polyolefin-Polymeren, die einen Maleinsäureanhydrid-Gehalt von größer gleich 0,001 Gew.-%, insbesondere größer gleich 0,01 Gew.-%, bevorzugt größer gleich 0,02 Gew.-%, besonders bevorzugt größer gleich 0,05 Gew.-% bezogen auf das Polyolefin-Polymer bzw. deren Mischungen enthalten. In vorteilhafter Weise enthalten die Polymere bzw. Mischungen einen Maleinsäureanhydrid-Gehalt von 0,01 - 15 Gew.-%, insbesondere 0,02 - 10 Gew.-%, bevorzugt 0,5-5 Gew.-% bezogen auf das Polyolefin-Polymer bzw. deren Mischungen. In einer anderen bevorzugten Ausführungsform enthalten die Polymere bzw. Mischungen einen Maleinsäureanhydrid-Gehalt von 2 - 15 Gew.-%, insbesondere 5 - 10 Gew.-%, bezogen auf das Polyolefin-Polymer bzw. deren Mischungen. Polylolefin-Polymere mit einem entsprechenden Maleinsäureanhydrid-Gehalt weisen besonders gute Festigkeiten der geschweißten Verbindung auf.

Vorteilhafterweise haben die Maleinsäureanhydrid gepfropften Polyolefin-Polymere ein gewichtsmittleres Molekulargewicht Mw von größer gleich 5000 g/mol, insbesondere größer gleich 50000 g/mol, bevorzugt größer gleich 100000 g/mol. Bevorzugt haben die Copolymere ein gewichtsmittleres Molekulargewicht Mw im Bereich von 5000 - 2000000 g/mol, insbesondere von 50000 - 1000000 g/mol, bevorzugt von 100000 - 500000 g/mol. Polymere mit einem entsprechenden gewichtsmittleren Molekulargewicht wirken sich positiv auf die Sprödität und Festigkeit der erhaltenen Verbindung aus. Das gewichtsmittlere Molekulargewicht kann mittels GPC gegen einen Polystyrol-Standard bestimmt werden.

Besonders bevorzugt sind Mischungen aus verschiedenen Maleinsäureanhydrid gepfropften Polyolefinen, insbesondere eine Mischung von Maleinsäureanhydrid gepfropften Polyethylen und Polypropylen. Bei der Verwendung entsprechender Mischungen im Primer konnten besonders gute Ergebnisse hinsichtlich der Zugfestigkeit beobachtet werden. Vorzugsweise besteht der Primer zu mindestens 50 Gew.-%, insbesondere zu 70 Gew.-%, vorzugsweise zu 90 Gew.-%, bevorzugt zu 95 Gew.-%, besonders bevorzugt zu 99 Gew.-% aus einer entsprechenden Mischung.

Neben dem erfindungsgemäßen Polymer kann der Primer vorzugsweise mindestens ein weiteres Polymer enthalten. Das mindestens eine weitere Polymer bzw. Copolymer ist vorzugsweise zu mindestens einem der beiden zu verschweißenden Kunststoffe und zum Primer Polyolefin-Polymer kompatibel. Besonders bevorzugt enthält der Primer mindestens ein Polyolefin-Polymer ohne Maleinsäureanhydrid-Gruppen, insbesondere ein Polyethylen und/oder Polypropylen ohne Maleinsäureanhydrid-Gruppen. Die Verwendung eines zusätzlichen Polymers neben dem erfindungsgemäßen Maleinsäureanhydrid gepfropften Polyolefin-Polymere im Primer kann zu einer weiteren Verbesserung der Festigkeit führen.

Als kompatibles weiteres Polymer wird vorzugsweise ein Polymer eingesetzt, welches zu einem, insbesondere zu beiden zu fügenden Kunststoffen und insbesondere auch zu dem oben genannten ersten erfindungsgemäßen Polymer eine gewichtete quadratische Distanz der Hansen-Parameter $(R_a)^2$ von kleiner 22 MPa, insbesondere von kleiner 17 MPa, bevorzugt von kleiner 15 MPa, besonders bevorzugt von kleiner 12 MPa aufweist.

Die gewichtete quadratische Distanz der Hansen-Parameter $(R_a)^2$ bestimmt sich gemäß der folgenden Formel:

$$(R_a)^2 = 4(\Delta\delta_D)^2 + (\Delta\delta_P)^2 + (\Delta\delta_H)^2$$

In dieser Formel ist $\delta_D$ der Hansen-Parameter für die Dispersionskräfte, $\delta_P$ der Hansen-Parameter für die Polarität und $\delta_H$ der Hansen-Parameter für die Wasserstoffbrückenbindungen. $\Delta\delta_D$, $\Delta\delta_P$ und $\Delta\delta_H$ stellen jeweils die Differenzen dieser Hansen-Parameter der zu vergleichenden Kunststoffe bzw. Polymere dar, z.B. $\Delta\delta_D = (\delta_{D1} - \delta_{D2})$ der Polymere 1 und 2. Die Bestimmung der Werte der einzelnen Hansen-Parameter $\delta_D$, $\delta_P$ und $\delta_H$ für die jeweiligen Kunststoffe bzw. Polymere erfolgt gemäß dem Buch "Hansen Solubility Parameters: A User's Handbook" von Charles M. Hansen (second edition; Taylor & Francis Group; 2007; ISBN-10 0-8493-7248-8). Dieser Quelle können bereits viele Werte einzelner Polymere entnommen werden. Gemäß der in diesem Buch beschriebenen Methode können die Hansen-Parameter vorzugsweise mit dem Programm HSPIP (4th Edition 4.1.07) aus der mitgelieferten Datenbank entnommen, oder, falls nicht vorhanden, mit der enthaltenen "DIY" - Funktionalität des Programms, vorzugsweise unter Verwendung des mitgelieferten neuronalen Netzes, wie in der Hilfe beschrieben, bestimmt werden. Das HSPIP Programm ist über die Fa. Steven Abbott TCNF Ltd erhältlich.

Der Gehalt des weiteren Polymeres, insbesondere des Polyolefin-Polymeres ohne Maleinsäureanhydrid-Gruppen, am Primer ist bevorzugt 1 - 40 Gew.-%, insbesondere 5 - 30 Gew.-%, besonders bevorzugt 10 - 20 Gew.-%, jeweils bezogen auf das Gesamtgewicht des Primers. Der Gehalt des weiteren Polymeres, insbesondere des Polyolefin-Polymeres ohne Maleinsäureanhydrid-Gruppen, am Polymergehalt des Primer ist bevorzugt 5 - 70 Gew.-%, insbesondere 20 - 60 Gew.-%, besonders bevorzugt 30 - 50 Gew.-%, jeweils bezogen auf den Gesamtpolymeranteil des Primers (Primer ohne Lösungsmittel und ohne Füllstoffe).

In einer besonders bevorzugten Ausführungsform enthält der Primer keine weiteren Polyethylen- und/oder Polypropylen-Polymere ohne Maleinsäureanhydrid-Gruppen, insbesondere keine Polyolefin-Polymere ohne Maleinsäureanhydrid-Gruppen.

Neben dem erfindungsgemäßen Polyolefin-Polymer und dem weiteren Polymer kann der Primer auch ein Lösungsmittel, insbesondere ein organisches Lösungsmittel enthalten. Vorzugsweise enthält der Primer einen Lösungsmittelgehalt von 10 - 95 Gew.-%, insbesondere 50 - 90 Gew.-%, besonders bevorzugt 70 - 85 Gew.-%, jeweils bezogen auf das Gesamtgewicht des Primers.

Geeignete Lösungsmittel sind alle gängigen Lösungsmittel, wie zum Beispiel Wasser, Alkohole, wie Ethanol, Alkane, wie Isooctan, Ketone, wie Methylisobutylketon (MIBK) oder Cyclohexanon (CH), Ether, wie Diethylether oder Tetrahydrofuran (THF), Ester, wie Essigsäureethylester, oder Carbonate, wie Dimethyl- oder Dipropylcarbonat, Toluol, Xylol oder Gemische daraus.

Wenn organische Lösungsmittel eingesetzt werden, beträgt der Gesamtpolymergehalt des Primers vorzugsweise 1 - 90 Gew.-%, insbesondere 2 - 50 Gew.-%, besonders bevorzugt 5 - 15 Gew.-%, jeweils bezogen auf das Gesamtgewicht des Primers. Der Gesamtpolymergehalt entspricht dem Gehalt aller im Primer verwendeten Polymere, insbesondere der erfindungsgemäßen Polyolefin-Polymere und der oben beschriebenen weiteren Polymere.

In einer anderen bevorzugten Ausführungsform liegt der Primer in Form einer wässrigen Dispersion oder Emulsion vor. In diesem Fall ist das erfindungsgemäße Polyolefin-Polymer bzw., wenn vorhanden, die weiteren Polymere in Wasser emulgiert oder dispergiert. In diesem Fall beträgt der Gesamtpolymergehalt des Primers vorzugsweise 5 - 90 Gew.-%, insbesondere 20 - 70 Gew.-%, besonders bevorzugt 30 - 55 Gew.-%, jeweils bezogen auf das Gesamtgewicht des Primers. Für die wässrige Dispersion/Emulsion ist es vorteilhaft, dass die Polymerkomponente im Wesentlichen nur aus dem erfindungsgemäßen Polyolefin-Polymer bzw. deren Mischung und dem gegebenenfalls vorhandenen oben genannten weiteren Polymer, insbesondere nur aus dem erfindungsgemäßen Polymer bzw. dessen Mischung besteht. Unter dem Begriff "im Wesentlichen aus" wird erfindungsgemäß verstanden, wenn die Polymerkomponente zu mehr als 95 Gew.-%, vorzugsweise mehr als 97 Gew.-%, ganz besonders bevorzugt mehr als 99 Gew.-% aus der erfindungsgemäßen Polyolefin-Polymer und dem gegebenenfalls vorhandenen oben genannten weiteren Polymer, insbesondere nur aus dem erfindungsgemäßen Polyolefin-Polymer bzw. deren Mischung besteht.

In einer besonders bevorzugten Ausführungsform ist der Primer im Wesentlichen frei von Lösungsmitteln.

Neben dem erfindungsgemäßen Polyolefin-Polymer, insbesondere einer Mischung aus Maleinsäureanhydrid gepfropften Polyethylen und Polypropylen, den oben genannten weiteren Polymeren und einem Lösungsmittel kann der Primer weitere Komponenten enthalten, wie zum Beispiel Füllstoffe, (Fluoreszenz)-Farbstoffe und Pigmente, Entschäumungshilfen, rheologisches Hilfsmittel, Benetzungshilfsmittel, Stabilisatoren oder Weichmacher. Die weiteren Komponenten, insbesondere für den Fall, dass der Primer im Wesentlichen frei von Lösungsmittel ist, können bis zu 70 Gew.-%, insbesondere bis zu 50 Gew.-%, vorzugsweise bis zu 30 Gew.-% enthaltend sein. Abgesehen von Farbstoffen und Pigmenten ist der Primer jedoch vorzugsweise im Wesentlichen frei von weiteren Komponenten, insbesondere im Wesentlichen frei von jeglichen anderen Komponenten. Unter dem Begriff "im Wesentlichen frei von" wird erfindungsgemäß verstanden, wenn der Primer weniger als 5 Gew.-%, vorzugsweise weniger als 1 Gew.-%, ganz besonders bevorzugt weniger als 0,1 Gew.-% der jeweiligen Substanzen, insbesondere nicht die jeweiligen Substanzen enthält.

Bei dem erfindungsgemäßen Verfahren zum Verschweißen von zwei unterschiedlichen Polyolefin-Kunststoffen wird ein Primer verwendet, wobei der Primer mindestens ein Maleinsäureanhydrid gepfropftes Polyolefin-Polymer enthält.

Der Primer dient bei diesem Verfahren als Hilfsmittel für die Verschweißung der beiden unterschiedlichen Polyolefin-Kunststoffe durch jeweiliges Aufschmelzen. Durch den verwendeten Primer enthaltend mindestens ein erfindungsgemäßes Polyolefin-Polymer kann eine Verträglichkeit zwischen den beiden Fügepartnern hergestellt werden, wodurch eine stabile und dauerhafte stoffschlüssige Verbindung zwischen den beiden Kunststoffen hergestellt werden kann.

Der Primer kann durch verschiedenste Verfahren auf die Oberfläche eines oder beider Fügepartner aufgetragen werden. So kann die Auftragung zum Beispiel durch eine Dosiervorrichtung, durch eine Nadel und Dosierroboter, durch Spritzgießen, durch Extrusion, durch Folienauftrag, durch Auftrag als Hotmelt, durch Aufsprühen, durch Aufstreichen oder durch Dippen erfolgen. Dabei kann der Primer entweder nur auf eine Oberfläche oder auf beide Oberflächen der zu verschweißenden Substrate aufgetragen werden. Vorzugsweise wird der Primer nur auf eine Oberfläche aufgetragen. In dem Fall des Verschweißens mittels einer Folie wird die Folie zwischen die Substrate gelegt.

Für den Fall, dass der Primer Lösungsmittel enthält bzw. als Emulsion/Dispersion eingesetzt wird, wird der Primer nach dem Auftrag auf eine oder beide Oberflächen vorzugsweise so lange getrocknet bis das Lösungsmittel soweit verdampft ist, dass eine nicht klebrige, dimensionsstabile Primerschicht entstanden ist. Insbesondere ist der Primer bereits nach wenigen Sekunden und bis zu mehreren Wochen schweißbar. Vorzugsweise wird der Primer nach dem Auftrag für mindestens eine Stunde, bevorzugt für mindestens 12 Stunden getrocknet.

Vorteilhaft am vorliegenden Primer ist, dass dieser bereits nach wenigen Sekunden nach Auftrag schweißbar ist und zudem die Fähigkeit zum Schweißen auch für mehreren Wochen behält. Dies gilt um so mehr für den Fall, dass der Primer ohne Lösungsmittel eingesetzt wird, insbesondere als Hotmelt.

Vorzugsweise erfolgt der Auftrag auf eine oder beide Oberflächen der zu verschweißenden Substrate in der Weise, dass der Primer eine Schichtdicke von 1 $\mu$m bis 5000 $\mu$m, insbesondere 100-3000 $\mu$m, bevorzugt 500-1000 $\mu$m. Falls ein Lösungsmittel im Primer enthalten war, bezieht sich die Schichtdicke auf den vom Lösemittel getrockneten Primer.

Nach dem Auftragen auf einen bzw. beide Oberflächen der zu verschweißenden Substrate und gegebenenfalls dem Trocknen des Primers können die zu verschweißenden Substrate mit einem gängigen Schweißverfahren miteinander verbunden werden. Das Schweißen von Kunststoffen erfolgt im Allgemeinen durch eine lokale Plastifizierung der Fügepartner in der Fügeebene und das Fügen unter Druck. Die Prozessparameter sind so zu wählen, dass ein ausgeprägtes Quetschfließen der Schmelze zu einer optimalen Verbindung der Fügepartner in der Fügeebene führt. Die Erwärmung kann über Konvektion, Kontakterwärmung, Strahlung oder Reibung erfolgen. Der unterschiedliche Energieeintrag zum Plastifizieren kann auf vielfältige Art und Weise erfolgen und hat zu verschiedenen Prozessen zum Schweißen von Kunststoffen geführt. Geeignete Schweißverfahren sind beispielsweise:

- Heißgasschweißen [HG](Hot gas welding)
  Konvektive Erwärmung mit einem heißen Gasstrom, im allgemeinen Luft, zweistufiger Prozess
- Heizelementschweißen [HE] (Hot plate welding)
  Kontakterwärmung, zweistufiger Prozess
- Ultraschallschweißen [US] (Ultrasonic welding)
  Erwärmung durch Reibung, eine transversale Welle im Ultraschallbereich führt zu einer Erwärmung in der Grenzschicht, einstufiger Prozess
- Hochfrequenzschweißen [HF] (High frequency welding)
  Erwärmung durch innere Reibung, polare Moleküle orientieren sich entsprechen eines hochfrequenten Magnetfelds, einstufig, nur für polare Kunststoffe und Folien eingesetzt
- Vibrationsschweißen [VIB] (Friction welding: Linear; Orbital; Spin; Angle)
  Erwärmung durch Reibung, einstufiger Prozess
- Laserschweißen [LW] (Laser welding: Kontur, Simultan, Quasisimultan, Maske) Erwärmung durch Strahlung, Strahlung kohärent, Lasertransmissionsschweißen, im Allgemeinen einstufig (zweistufig möglich)
- Infrarotschweißen [IR] (Infrared welding)
  Erwärmung über Strahlung, Strahlung inkohärent, zweistufig

Die oben angeführten Schweißverfahren können gegebenenfalls auch kombiniert werden wie zum Beispiel das Infrarotschweißen mit dem Vibrationsschweißen. Besonders bevorzugt erfolgt das Verschweißen des Polypropylen-Kunststoffs mit dem Polyethylen-Kunststoff durch ein Schweißverfahren ausgewählt aus Heizelementschweißen, Vibrationsschweißen, Wärmekontakt- oder Wärmeimpulsschweißen, Warmgas- oder Heissgasschweißen, Mikrowellen- oder Induktionsschweißen. Laserstumpf- oder Laserdurchstrahlschweißen, Infrarotschweißen, Ultraschallschweißen, sowie Kombinationen daraus, insbesondere ausgewählt aus Infrarotschweißen, Vibrationsschweißen, Heizelementschweißen, Ultraschallschweißen, sowie Kombinationen daraus.

Besonders bevorzugt ist ein Verfahren zum stoffschlüssigen Fügen der zwei Kunststoffe unter Verwendung des Primers, beinhaltend die folgenden Schritte.

- Bereitstellen des ersten Kunsstoffes aufweisend eine erste Fügezone,

- Bereitstellen des zweiten Kunststoffes aufweisend eine zweite Fügezone,
- Vorwärmen der ersten Fügezone,
- Auftragen des Primers auf die vorgewärmte erste Fügezone, insbesondere bei lösungsmittelfreien Primern,
- In-Kontakt-bringen der mit dem Primer versehenen ersten Fügezone mit der zweiten Fügezone,
- Stoffschlüssiges Verbinden der ersten Fügezone mit der zweiten Fügezone insbesondere durch den Einsatz üblicher Schweißverfahren von Kunststoffen wie beispielsweise dem

Infrarotschweißen, Heizelementschweißen, Warmgasschweißen, Vibrationsschweißen, Ultraschallschweißen.

Für das Schweißen von Kunststoffen kann allgemein das Verständnis der DIN 1910-3:1977-09 angewendet werden. Mithin kann darunter ein stoffschlüssiges Verbinden von thermoplastischen Kunststoffen unter Zuhilfenahme von Wärme oder/und Druck verstanden werden. Die Erwärmung kann beispielsweise auf Basis von Kontakterwärmung (Schweißen durch festen Körper), Konvektionserwärmung (Schweißen durch Warmgas), Strahlungserwärmung (Schweißen durch Strahl) und Erwärmung durch Reibung (Schweißen durch Bewegung) sowie das Schweißen durch elektrischen Strom erfolgen.

In einer vorteilhaften Weiterbildung kommt ein Primer zum Einsatz, der derart ausgewählt und auf das Verfahren abgestimmt ist, dass das Auftragen auf eine erwärmte und/oder heiße Fügezone mit einer Temperatur, die kleiner ist als die Zersetzungstemperatur der Polymere im Primer, keinen Einfluss auf die innere chemische Vernetzung des Primers hat.

Vorteilhaft ist es, die erste Fügezone des ersten Kunststoffes vorzuwärmen. Für das Vorwärmen können dem Fachmann bekannte und sich für den Einsatzzweck eignende Hilfsmittel und Techniken zum Einsatz kommen. Insbesondere eignet sich der Einsatz von Warmgas oder Plasma zur Vorwärmung. Denkbar ist auch eine Vorwärmung mittels Bestrahlung, insbesondere Infrarotstrahlung oder Laserstrahlung. Auch kann ein Heizelement oder ein beheiztes Werkzeug zum Einsatz kommen, um die erste Fügezone vorzuwärmen. Schließlich ist auch ein Vorwärmen in einem Ofen oder einem beheizten Raum denkbar. Denkbar ist eine Vorwärmung des gesamten Kunststoffes und somit auch besagter Fügezone. Alternativ oder zusätzlich ist aber auch eine Vorwärmung lediglich der Fügezone selbst möglich.

In einer vorteilhaften Weiterbildung liegt der Abstand der Heizvorrichtung während der Vorwärmung zum Kunststoff, insbesondere zur vorzuwärmenden ersten Fügezone, insbesondere des wärmeabgebenden Bereichs der Heizvorrichtung oder des wärmeauslösenden Bereichs der Heizvorrichtung oder der zur vorzuwärmenden wirksamen Oberfläche der Heizvorrichtung oder die hinsichtlich der ersten Fügezone gegenüberliegenden Bereich der Heizvorrichtung in einem Bereich von 0,5 mm bis 100 mm, vorzugsweise im Bereich von 1 mm bis 60 mm. Denkbar ist alternativ auch, dass eine Erwärmung durch und/oder bei Kontaktierung insbesondere der ersten Fügezone durch das Heizelement der Heizvorrichtung erfolgt.

Ein weiterer Vorteil ist die Auswahl des Kunststoffes für den ersten Fügepartner und die Einstellung der Verfahrensparameter auf den ersten Kunststoff derart, dass die erste Fügezone beim Vorwärmen aufgeschmolzen wird und dass beim Vorwärmen eine Schmelzeschicht in der ersten Fügezone erzeugt wird. Die Dicke der Schmelzeschicht liegt in einer bevorzugten Ausführungsform vorzugsweise im Bereich von 0,05 mm bis 6 mm, besonders bevorzugt im Bereich von 0,1 mm bis 5 mm. Eine derartige Schmelzeschicht kann zu einer besseren Adhäsion und/oder Diffusion und/oder Wechselwirkung der Moleküle führen und in Verbindung mit einem gewissen Fluss zu einer besseren Verbindungsschicht. Befindet sich die Grenzschicht des ersten Kunststoffs im schmelzeflüssigen Zustand, kann es mit dem Primer zu Wechselwirkungen bis hin zu chemischen Bindungen kommen. Die Schmelzschicht kann insbesondere abhängig sein von der Bauteilgeometrie und der jeweiligen Bauteilauslegung. Vorzugsweise sind die Verfahrensparameter derart eingestellt und/oder gewählt, dass es zu keiner Verformung der Bauteile kommt. Bevorzugt ist ein Ausgleich von Temperaturunterschieden zwischen der Fügezone und dem aufzutragenden Primer durch geeignete Maßnahmen und/oder Verfahrensschritte vorgesehen. Dabei ist es insbesondere denkbar den Primer vorzuwärmen, um den Temperaturunterschied zwischen dem vorzugsweise thermoplastischen Primer und der ersten Fügezone zu reduzieren. Dies kann beispielsweise der schnellen Abkühlung der ersten Fügezone zwischen den Prozessschritten entgegenwirken.

Optional erfolgt vorzugsweise vor dem Schritt des Vorwärmens der ersten Fügezone eine Vorbehandlung der ersten Fügezone. Alternativ oder zusätzlich kann auch eine Vorbehandlung der zweiten Fügezone erfolgen. Als mögliche Vorbehandlung ist beispielsweise das Reinigen mittels eines Lösungsmittels oder eines beispielsweise alkalischen Kunststoffreinigers denkbar. Auch kann eine mechanische Vorbehandlung zum Einsatz kommen, insbesondere mittels Kratzen, Schmirgeln, Bürsten oder Strahlen. Denkbare chemische Vorbehandlungen sind insbesondere das Beizen oder der Einsatz reaktiver Gase. Darüber hinaus könnte sich der Einsatz einer thermischen, chemischen oder/und physikalischen Vorbehandlung als zweckmäßig erweisen, insbesondere mittels Gasflamme oder Plasmabogen. Alternativ oder zusätzlich kann eine elektrische Vorbehandlung mittels Corona-entladung, bei der die erste Fügezone und/oder die zweite Fügezone einer elektrischen Corona-entladung ausgesetzt wird damit an der entsprechenden Oberfläche polare Moleküle entstehen. Eine weitere Möglichkeit ist die Plasmabehandlung, vorzugsweise unter Einsatz einer Plasmadüse für die Vorbehandlung der Fügezone, insbesondere um eine Aktivierung und/oder Reinigung der entsprechenden Oberfläche zu erreichen. Gleichwohl kann sich auch eine Beschichtung mittels Plasma als zweckmäßig erweisen.

Eine weitere Möglichkeit ist das Beflammen der Fügezone zur Erhöhung der Oberflächenspannung bei geeigneten Kunststoffen. Eine weitere Art der Vorbehandlung ist die Bestrahlung mittels UV-Strahlen, Elektronenstrahlen, radioaktiven Strahlen oder mittels Laser. Schließlich kann die Vorbehandlung in Form einer Beschichtung erfolgen, insbesondere durch einen Anstrich oder einen Haftvermittler. Denkbar ist auch eine Vorbehandlung des ersten Kunststoffes oder der Fügezonen des ersten Kunststoffes in einem größeren zeitlichen Abstand vor dem Vorwärmen. So ist beispielsweise denkbar, die Vorbehandlung schon im Rahmen des Fertigungsprozesses des ersten Kunststoffes vorzunehmen, um im erfindungsgemäßen Verfahren den vorbehandelten Kunststoff weiterverarbeiten zu können.

Der Auftrag des Primers ist auf unterschiedliche Art und Weise denkbar. Beispielsweise und insbesondere im industriellen Bereich ist der Auftrag mittels einer automatisierten Auftragshilfe, insbesondere mittels eines Dosierroboters denkbar. Selbiger kann dabei mit einem Nadel und/oder einem Höhensensor ausgerüstet sein, um komplexe Dosierungen durchführen zu können. Auch kann der Auftrag des Primers mittels Spritzgießen erfolgen, indem der Primer in einer Spritzgießmaschine plastifiziert und in die der erste Kunststoff mit der ersten Fügezone enthaltende Form unter Druck eingespritzt wird. Alternativ ist ein Folienauftrag denkbar, wobei in einem ersten Schritt mittels Folienblasen oder Flachfolienextrusion zunächst eine Folie aus dem Primer hergestellt wird. Anschließend kann die Folie beispielsweise mittels eines Schneid- oder Stanzverfahrens in eine beliebige Form zugeschnitten und in einem weiteren Schritt nach dem genannten Vorwärmen auf die erste Fügezone aufgebracht werden. Hierbei hat sich der Einsatz von Folien/Platten mit einer Stärke im Bereich von 1 $\mu$m - 5000 $\mu$m als zweckmäßig erwiesen. Weitere denkbare Auftragsmöglichkeiten sind das Extrusionsschweißen, bei dem der Primer in Form eines Schweißdrahtes vorliegt oder in einem Extruder aufgeschmolzen und in Schmelze auf die erste Fügezone appliziert werden kann. Auch ist die Bereitstellung des Primers in Form eines Schweißdrahtes möglich, um eine Applikation mittels Heißluftschweißen zu ermöglichen. Eine weitere Möglichkeit ist das Aufbringen des Primers mittels eines Sprühverfahrens. Auch beim Aufbringen beim Spritzguss ist eine Vorbehandlung oder/und Vorwärmung und/oder lokal unterschiedliche Temperierung des Spritzgießwerkzeug möglich. Selbstverständlich sind auch andere, dem Fachmann bekannte und sich für den spezifischen Anwendungsfall eignende Auftragsarten denkbar.

Ein weiterer Vorteil ist die weitere Erwärmung oder Erwärmung der ersten Fügezone während des Auftrags des Primers, insbesondere um einen Temperaturabfall der ersten Fügezone zwischen dem Vorwärmen und dem Auftragen des Primers zu vermeiden. Dies kann durch den oben beschriebenen Verfahrensschritt zum Vorwärmen erfolgen, welcher der Einfachheit halber während des Auftrags fortgeführt werden kann. Alternativ oder zusätzlich ist eine zusätzliche Erwärmung insbesondere mittels eines weiteren Verfahrensschrittes möglich. So kann sich beispielsweise als zweckmäßig erweisen, ein simultanes Erwärmen der ersten Fügezone durchzuführen, beispielsweise mittels simultanen Bestrahlens der ersten Fügezone mit Strahlung, erzwungene Konvektion, Kontakterwärmung während des Auftrages, um einen Temperaturabfall der ersten Fügezone nach dem Vorwärmen zu vermeiden.

In einer vorteilhaften Weiterbildung wird der Primer derart aufgebracht, das eine Verbindungsschicht mit einer Dicke im Bereich von 1 $\mu$m bis 5 mm, vorzugsweise im Bereich von 10 $\mu$m bis 3 mm auf der erste Fügezone angeordnet ist. Unter der Dicke der Verbindungsschicht ist dabei die Materialdicke der Verbindungsschicht auf der ersten Fügezone zu verstehen.

Ein weiterer Vorteil ist das Auftragen des Primers mittels einer Dosiervorrichtung auf die erste Fügezone unter Relativbewegung zwischen erster Fügezone und der Dosiervorrichtung, wobei mittels einer Heizvorrichtung die erste Fügezone, auf welche der Primer aufgetragen wird, unter Relativbewegung zwischen erster Fügezone und Heizvorrichtung, vor dem Auftrag des Primers vorgewärmt wird, wobei der Auftrag des Primers über die Dosiervorrichtung im vorgewärmten Zustand der ersten Fügezone erfolgt.

Hierbei hat es sich als besonders vorteilhaft erwiesen, dass die Heizvorrichtung bei der Vorwärmung an der ersten Fügezone mit einer Geschwindigkeit im Bereich von 10 mm/min bis 100 m/min, vorzugsweise im Bereich von 10 mm/min bis 30 m/min vorbeigeführt wird.

Ferner kann es von Vorteil sein, dass die Heizvorrichtung der Dosiervorrichtung vorzugsweise in einem definierten und konstanten Abstand voreilt. Insbesondere ist eine derartige Durchführung des Verfahrens von Vorteil, bei der der Primer mittels einer Dosiervorrichtung auf die erste Fügezone unter Relativbewegung von Dosiervorrichtung und erster Fügezone im Bereich von 10 mm/min bis 100 m/min, vorzugsweise im Bereich von 10 mm/min bis 30 m/min aufgetragen wird, wobei mittels einer Heizvorrichtung besagte Fügezone, auf welche der Primer aufgetragen wird, unter Relativbewegung von Heizvorrichtung und erster Fügezone vor dem Auftrag des Primers vorgewärmt wird, wobei die Heizvorrichtung der Dosiervorrichtung oder einer Düse der Dosiervorrichtung zum Auftragen des Primers in einem zeitlichen Abstand im Bereich von 0,1-10 s vorzugsweise simultan voreilt.

Hierbei hat es sich als besonders vorteilhaft erwiesen, eine Beschichtungseinheit bestehend aus Dosiervorrichtung und Heizvorrichtung einzusetzen. Unter einer Beschichtungseinheit kann dabei insbesondere eine Einheit verstanden werden, die eine feste Verbindung von Heizvorrichtung und Dosiervorrichtung vorsieht, so dass die Heizvorrichtung der Dosiervorrichtung in vorzugsweise einem definierten und konstanten Abstand bei der Relativbewegung voreilt, um sicherzustellen, dass die erste Fügezone unmittelbar vor dem Auftrag des Primers vorgewärmt wird. Selbstverständlich ist hierbei auch eine Einstellbarkeit des Abstandes oder bei konvektiver Vorwärmung das Einstellen des Volumenstroms bzw. Düsendurchmessers des Mediums, insbesondere durch geeignete mechanische, elektromechanische oder auch pneumatisch betriebene Stellmittel denkbar.

Andererseits kann unter der Beschichtungseinheit auch eine Heizvorrichtung und eine Dosiervorrichtung als zwei völlig voneinander getrennte oder separierte Baugruppen verstanden werden, die jedoch die gleiche oder im Wesentlichen die gleiche Relativbewegung hinsichtlich des Kunststoffes eingehen, um sicherzustellen, dass der Auftragsort des Primers unmittelbar vor dem Auftrag des Primers vorgewärmt wird.

In einer vorteilhaften Weiterbildung gehen Heizvorrichtung und Dosiervorrichtung eine zwar im Wesentlichen gleiche primäre Relativbewegung oder Grundrichtung hinsichtlich des Kunststoffes ein, jedoch erfährt zumindest eine von beiden genannten Vorrichtungen zusätzlich zur besagten primären Relativbewegung eine zusätzliche Relativbewegung hinsichtlich des Kunststoffes. So kann beispielsweise die Heizvorrichtung und/oder die Dosiervorrichtung neben der primären Relativbewegung, in der beispielsweise auch der Auftrag des Primers erfolgen kann, eine oder mehrere sekundäre Relativbewegungen eingehen. Beispielsweise kann insbesondere die Heizvorrichtung und/oder die Dosiervorrichtung eine um die primäre Relativbewegung kreisende oder mäanderförmige sekundäre Relativbewegung eingehen oder erfahren.

Dabei kann der Kunststoff auf der einen Seite oder die Heizvorrichtung und Dosiervorrichtung oder beide Vorrichtungen zusammen als Beschichtungseinheit auf der anderen Seite bewegt werden. Dabei ist es möglich, dass die Heizvorrichtung und Dosiervorrichtung oder beide Vorrichtungen zusammen als Beschichtungseinheit auf der einen Seite bzw. der Kunststoff auf der anderen Seite stillstehen oder jeweils mit dem sich bewegenden Teil in abweichende Richtung bewegt werden.

In einer vorteilhaften Weiterbildung erfolgt eine primäre Relativbewegung in einer Geschwindigkeit in einem Bereich von 10 mm/min bis 100 m/min, vorzugsweise im Bereich von 10 mm/min bis 30 m/min, so dass beispielsweise insbesondere auch durch geeignete Gestaltung der Heizvorrichtung möglichst kurze Verweilzeiten des Kunststoffes innerhalb der Heizfläche der Heizvorrichtung ergeben, insbesondere in einem Bereich von 1-60 s. Hierunter kann der Bereich bzw. der Raum um die Heizvorrichtung verstanden werden, der einen Einfluss auf die Temperatur im Sinne einer Temperaturerhöhung, also einer Vorwärmung der ersten Fügezone des ersten Kunststoffes hat. So kann beispielsweise eine zu große Aufheizung und eine Kunststoffschädigung oder Kunststoffbeeinträchtigung vermieden werden.

Zudem kann es sich als vorteilhaft erweisen, insbesondere zur Anbindung der Dosiervorrichtung und/oder der Heizvorrichtung an/in bestehende Fertigungslinien, die Heizvorrichtung mit einer Busschnittstelle auszustatten, insbesondere eines Profibus, oder einer Realtime-Ethernet-Schnittstelle.

Nach dem Aufbringen besagten Primers ist vorgesehen, die zweite Fügezone mit der Primerschicht in Kontakt zu bringen. Hierbei kann sich eine Fixierung beider Kunststoffe zueinander als zweckmäßig erweisen, insbesondere mittels dem Fachmann bekannter Spannvorrichtungen oder ähnlicher Hilfsmittel zur Fixierung.

Natürlich kann optional vor dem Schritt des In-Kontakt-Bringens der zweiten Fügezone mit der Primerschicht eine Vorbehandlung der zweiten Fügezone erfolgen. Dabei sind insbesondere alle oberhalb beschriebenen Techniken für eine Vorbehandlung denkbar. Denkbar ist auch eine Vorbehandlung des zweiten Kunststoffes oder der Fügezonen des zweiten Kunststoffes in einem größeren zeitlichen Abstand vor dem In-Kontakt-Bringen. So ist beispielsweise denkbar, die Vorbehandlung schon im Rahmen des Fertigungsprozesses des zweiten Kunststoffes vorzunehmen, um im erfindungsgemäßen Verfahren einen vorbehandelten Kunststoff weiterverarbeiten zu können. Die Vorbehandlung des zweiten Kunststoffes kann auch den Auftrag des Primers auf die zweite Fügezone beinhalten. Dabei ist vorzugsweise auch eine Vorwärmung der zweiten Fügezone vor dem Auftrag des Primers denkbar. Die obigen Ausführungen sind an dieser Stelle ebenfalls bevorzugt.

Es schließt sich an das oberhalb beschriebene In-Kontankt-bringen von zweiter Fügezone und Primer ein Fügeprozess an, in dem die behandelten und/oder beschichteten Fügepartner durch Wärmezufuhr plastifiziert und vorzugsweise unter Einwirkung von Druck miteinander stoffschlüssig verbunden werden. Denkbar ist für diese stoffschlüssige Verbindung der zweiten Fügezone mit dem Primer der Einsatz einer Wärmezufuhr mittels Wärmeleitung, beispielsweise mittels Heizelementschweissen und/oder Wärmekontaktschweißen und/oder Wärmeimpulsschweißen; durch Reibung, insbesondere Ultraschall-, Reib-/Vibrations- oder Hochfrequenzschweissen; Mikrowellen- oder Induktionsschweißen; durch Konvektion, wie beispielsweise Warmgas- oder Heissgasschweissen; mittels Strahlung, beispielsweise Infrarot-, Laserstumpf- oder Laserdurchstrahlschweissen oder auch durch Kombination zweier oder mehrerer dieser Techniken.

Ein weiterer Gegenstand dieser Erfindung sind gemäß dem erfindungsgemäßen Verfahren hergestellte Gegenstände bzw. Produkte.

Außerdem ist Gegenstand dieser Erfindung die Verwendung eines erfindungsgemäßen Primers zur Verschweißung von zwei unterschiedlichen Polyolefin-Kunststoffen.

Ausführunqsbeispiele

Eingesetzte Materialien und Abkürzungen:

PP = Polypropylen
PE = Polyethylen
MAH = Maleinsäureanhydrid
Primer 1 = PE-(MD)-MAH mit MFR (190°C;21,6 Kg) = 12-22 und PP-MAH mit MFR (230°C;2,16 Kg) = 7-12 im Verhältnis 1:1 w/w kompoundiert
Primer 2 = PE-(MD)-MAH mit MFR (190°C;21,6 Kg) = 12-22 und PP-MAH mit MFR (230°C;2,16 Kg) = 7-12 im Verhältnis 2:1 w/w kompoundiert
Primer 3 = PE-(MD)-MAH mit MFR (190°C;21,6 Kg) = 12-22 und PP-MAH mit MFR (230°C;2,16 Kg) = 7-12 im Verhältnis 4:1 w/w kompoundiert
Primer 4 = PE-(MD)-MAH mit MFR (190°C;21,6 Kg) = 12-22 und Infuse 9808.15 im Verhältnis 2:1 w/w kompoundiert (DOW Chemical Company)
Prüfkraftstoff Zusammensetzung:

|  | FAM B vol.-% |
|---|---|
| Methanol | 15,00 |
| Wasser | 0,50 |
| Toluol | 42,25 |
| Isooctan | 25,35 |
| Diisobutylen | 12,68 |
| Ethanol | 4,23 |
| Gesamt | 100,00 |

IR: Infrarot-Schweißen; VIB: Vibrations-Schweißen;

Herstellung der Prüfkörper:

Zur Herstellung der Primerpolymere wurde PE-(MD)-MAH und PP-MAH Polymergranulat in unterschiedlichem Verhältnis vorgemischt, in der Plastifiziereinheit einer Spritzgießmaschine aufgeschmolzen (230 °C) und kompoundiert und zu Platten von 130 mm x 70 mm x 3 mm verarbeitet. Die Zusammensetzung der Primer ist aus der folgenden Tabelle in Kg zu entnehmen.

| Primer Nr. | PE-(MD)-MAH | PP-MAH | Verhältnis PE-MAH:PP-MAH w/w |
|---|---|---|---|
| 1 | 5 | 5 | 1:1 |
| 2 | 10 | 5 | 2:1 |
| 3 | 8 | 2 | 4:1 |

Die Platten wurden auf 130 mm x 68 mm x 3 mm gefräst und mittels IR-Schweißen und Vibrations-Schweißen wurde die Fläche 130 mm x 3 mm mit PE und PP jeweils mit der gleichen Fläche auf Stoß geschweißt. 24 Stunden nach dem Schweißen wurden 8 mm von beiden Seiten der Platte abgesägt, die restliche Platte halbiert (Schnitte senkrecht zur Fügeebene) und im Zugversuch mit 50 mm/s Prüfgeschwindigkeit bei Raumtemperatur geprüft. Die nachfolgende Tabelle gibt jeweils für die Kombination von Primer mit verwendetem Kunststoff und Schweißverfahren an, welche Zugfestigkeit (in MPa) für die verschweißten Probekörper erhalten werden konnten:

| Polymer 1 | Polymer 2 | Primer Nr. | Schweißverfahren | Zugfestigkeit MPa |
|---|---|---|---|---|
| PE Lupolen GX5038BG25 | PP Sabic 4935 | - | VIB | 11.12 |
| PE Lupolen GX5038BG25 | PP Sabic 4935 | - | IR | 10.30 |

(fortgesetzt)

| Polymer 1 | Polymer 2 | Primer Nr. | Schweißverfahren | Zugfestigkeit MPa |
|---|---|---|---|---|
| PE Lupolen GX5038BG25 | - | 2 | VIB | 17.28 |
| PE Lupolen GX5038BG25 | - | 2 | IR | 18.81 |
| PP Sabic 4935 | - | 2 | VIB | 18.05 |
| PP Sabic 4935 | - | 2 | IR | 20.59 |
| PE Lupolen GX5038BG25 | - | 3 | VIB | 16.60 |
| PP Sabic 4935 | - | 3 | VIB | 14.94 |

Die Ergebnisse zeigen, dass die mit einem Primer Nr. 2 verschweißten Proben ausgezeichnete Zugfestigkeit aufweisen. Der Verbund (Primer Nr.2)-PE und (Primer Nr.2)-PP erreicht dabei etwa die Grundfestigkeit von PE von 19,13 MPa. Somit kann durch den Primer eine besonders feste Verschweißung der Kunststoffe PE mit PP erreicht werden.
Die in gleicher Weise IR-geschweißten Platten wurden in Prüfkraftstoff FAM-B für 14 Tage bei 25 °C gelagert um die Medienbeständigkeit der geschweißten Verbindung zu testen. Die Zugfestigkeiten bei Raumtemperatur mit 50 mm/s Prüfgeschwindigkeit der geschweißten und gesägten Platten sind in der folgenden Tabelle gezeigt.

| Polymer 1 | Polymer 2 | Primer Nr. | Alterung | Zugfestigkeit MPa |
|---|---|---|---|---|
| PE Lupolen GX5038BG25 | PP Sabic 4935 | - | 14 Tage bei 25°C in FAM-B | 0,51 |
| PE Lupolen GX5038BG25 | - | 2 | 14 Tage bei 25°C in FAM-B | 12,86 |
| PP Sabic 4935 | - | 2 | 14 Tage bei 25°C in FAM-B | 11,51 |

Die Ergebnisse zeigen eine ausgezeichnete Alterungsbeständigkeit der verschweißten Proben gegenüber des Prüfkraftstoffs FAM-B.
Um den Verbund von PE-Primerpolymer-PP mit separater Primerschicht zu testen wurden Platten von 130 mm x 3 mm des Primer 2 an PP Sabic 4935 IR geschweißt. Anschließend wurde die Primerplatte abgefräst, so dass 0,5 mm Primerschicht auf der PP-Platte verblieb und die Primerschicht wurde mit PE Lupolen GX5038BG25 Platten von ebenfalls 130 mm x 3 mm geschweißt. Somit wurde ein Aufbau von PE-(Primer 2)-PP erhalten.
Die IR geschweißten Polymere wurden nach 24 Stunden im Zugversuch wie oben beschrieben bei Raumtemperatur mit 50 mm/s geprüft.
Die Proben hatten eine ausgezeichnete Zugfestigkeit von 15,14 MPa. Somit konnte eine ausgezeichnete Festigkeit mit Primer 2 beim Schweißen von PE mit PP erhalten werden.
Umsetzung PE-MAH und PP-MAH mit Hexamethylendiamin:
PE-MAH und PP-MAH wurden in Lösung mit Hexamethylendiamin umgesetzt. In der nachfolgenden Tabelle sind die eingesetzten Mengen der Edukte und des Lösemittels aufgeführt.

| Primer Nr. | PE-MAH | PP-MAH | Hexameth ylendiamin | Xylol |
|---|---|---|---|---|
| 5 | 17,5 g | 17,5 g | 1,0 g | 315 mL |
| 6 | 10,0 g | 10,0 g | 0,5 g | 180 mL |
| 7 | 10,0 g | 10,0 g | 0,8 g | 180 mL |

PE-MAH und PP-MAH wurden im 500 mL 2-Halskolben in Xylol bei 130°C gelöst und im Anschluss über einen Tropftrichter das Amin, gelöst in 20 mL Xylol, langsam zugetropft. Nach 2,5 Stunden unter Rückfluss wurde das Reaktionsgemisch in 500 mL Wasser gefällt, über Büchnertrichter abfiltriert und mehrmals mit kleinen Mengen Aceton gewaschen. Nach Trocknung im Vakuum wurden farblose Feststoffe erhalten.
Die erhaltenen Primerpolymere wurden mittels Warmgas auf PE Lupolen GX5038BG25 sowie auf PP Sabic 4935 aufgeschmolzen und die Haftung nach dem Abkühlen qualitativ bewertet. Primer 5, 6 und 7 zeigten ausgezeichnete Haftung zu PE und zu PP.

**Patentansprüche**

1. Verfahren zum Verschweißen von zwei unterschiedlichen Polyolefin-Kunststoffen unter Verwendung eines Primers, wobei der Primer mindestens ein Maleinsäureanhydrid gepfropftes Polyolefin-Polymer enthält.

2. Verfahren zum Verschweißen nach Anspruch 1, **dadurch gekennzeichnet, dass** die Polyolefin-Kunststoffe polyolefinische Polymere ausgewählt aus der Gruppe bestehend aus Poly-alpha-Olefin-Homopolymeren auf Basis von Ethen, Propen und/oder Buten, insbesondere Homopolymere aus Ethen oder Propen, und Poly-alpha-Olefin-Copolymere auf Basis von Ethen, Propen, 1-Buten, 1-Hexen und 1-Octen, insbesondere Ethylen/alpha-Olefin- und Propylen/alpha-Olefin-Copolymere, vorzugsweise Copolymere von Ethylen oder Propylen mit 1-Buten, 1-Hexen, 1-Octen, oder einer Kombination davon enthalten.

3. Verfahren zum Verschweißen nach Anspruch 1 oder 2, **dadurch gekennzeichnet, dass** der erste Fügepartner ein Polyethylen-Kunststoff, insbesondere HD-Polyethylen-, MD-Polyethylen-, LD-Polyethylen-, UHMW-Polyethylen- oder LLD-Polyethylen-Kunststoff, und der zweite Fügepartner ein Polypropylen-Kunststoff ist.

4. Verfahren zum Verschweißen nach einem der Ansprüche 1 bis 3, **dadurch gekennzeichnet, dass** das mindestens eine Maleinsäureanhydrid gepfropfte Polyolefin-Polymer ausgewählt wird aus Maleinsäureanhydrid gepfropften Polyethylenen oder Maleinsäureanhydrid gepfropften Polypropylenen.

5. Verfahren zum Verschweißen nach einem der Ansprüche 1 bis 4, **dadurch gekennzeichnet, dass** der Primer eine Mischung von Maleinsäureanhydrid gepfropften Polyolefinen enthält, insbesondere eine Mischung aus mindestens einen Maleinsäureanhydrid gepfropften Polyethylen und mindestens einem Maleinsäureanhydrid gepfropften Polypropylen.

6. Verfahren zum Verschweißen nach Anspruch 5, **dadurch gekennzeichnet, dass** das mindestens das Verhältnis der unterschiedlichen Maleinsäureanhydrid gepfropften Polyolefin-Polymeren, insbesondere das Verhältnis von Maleinsäureanhydrid gepfropften Polyethylen zu Maleinsäureanhydrid gepfropften Polypropylen, 0,2:1 bis 20:1, insbesondere 0,5:1 bis 10:1, bevorzugt 1:1 bis 5:1, besonders bevorzugt 1,5:1 bis 3:1 ist.

7. Verfahren zum Verschweißen nach einem der Ansprüche 1 bis 6, **dadurch gekennzeichnet, dass** das mindestens eine Maleinsäureanhydrid gepfropfte Polyolefin bzw. deren Mischung einen Maleinsäureanhydrid-Gehalt von 0,01 - 15 Gew.-%, insbesondere 0,02 - 10 Gew.-%, bevorzugt 0,05 - 8 Gew.-%, besonders bevorzugt 0,5 - 5 Gew.-% bezogen auf das Polyolefin-Polymer bzw. deren Mischungen aufweist.

8. Verfahren zum Verschweißen nach einem der Ansprüche 1 bis 7, **dadurch gekennzeichnet, dass** die Maleinsäureanhydrid-Gruppen des Polyolefin-Polymers zumindest teilweise mit Aminen, insbesondere aliphatischen Aminen, bevorzugt aliphatischen Diaminen, wie Hexamethylendiamin umgesetzt sind, bevorzugt 5-100 mol%, insbesondere 10-80 mol%, bevorzugt 20-70 mol% der Maleinsäureanhydrid-Gruppen des erfindungsgemäßen Polymeres bzw. der Mischung.

9. Verfahren zum Verschweißen nach einem der Ansprüche 1 bis 8, **dadurch gekennzeichnet, dass** der Primer neben dem Maleinsäureanhydrid gepfropten Polyolefin-Polymer mindestens ein weiteres Polymer enthält, welches zu mindestens einem der beiden zu verschweißenden Kunststoffen kompatibel ist.

10. Gegenstand hergestellt nach einem Verfahren zum Verschweißen gemäß einem der Ansprüche 1-9.

11. Verwendung eines Primers, wie in einem der Ansprüche 1-9 charakterisiert, zur Verschweißung von zwei unterschiedlichen Polyolefin-Kunststoffen.

**Claims**

1. A method for welding two different polyolefin plastics materials using a primer, wherein the primer contains at least one maleic acid anhydride-grafted polyolefin polymer.

2. The welding method according to claim 1, **characterized in that** the polyolefin plastics materials contain polyolefinic polymers selected from the group consisting of poly-alpha-olefin homopolymers based on ethene, propene and/or butene, in particular ethene homopolymers or propene homopolymers, and poly-alpha-olefin copolymers based on ethene, propene, 1-butene, 1-hexene and 1-octene, in particular ethylene/alpha-olefin and propylene/alpha-olefin copolymers, preferably copolymers of ethylene or propylene with 1-butene, 1-hexene, 1-octene or a combination thereof.

3. The welding method according to claim 1 or claim 2, **characterized in that** the first joining part is a polyethylene plastics material, in particular HD polyethylene, MD polyethylene, LD polyethylene, UHMW polyethylene or LLD polyethylene plastics material, and the second joining part is a polypropylene plastics material.

4. The welding method according to one of claims 1 to 3, **characterized in that** the at least one maleic acid anhydride-grafted polyolefin polymer is selected from maleic acid anhydride-grafted polyethylenes or maleic acid anhydride-grafted polypropylenes.

5. The welding method according to one of claims 1 to 4, **characterized in that** the primer contains a mixture of maleic acid anhydride-grafted polyolefins, in particular a mixture of at least one maleic acid anhydride-grafted polyethylene and at least one maleic acid anhydride-grafted polypropylene.

6. The welding method according to claim 5, **characterized in that** the at least the ratio of the different maleic acid anhydride-grafted polyolefin polymers, in particular the ratio of maleic acid anhydride-grafted polyethylene to maleic acid anhydride-grafted polypropylene, is 0,2:1 to 20:1, in particular 0,5:1 to 10:1, preferably 1:1 to 5:1, particularly preferably 1,5:1 to 3:1.

7. The welding method according to one of claims 1 to 6, **characterized in that** the at least one maleic acid anhydride-grafted polyolefin or the mixture thereof has a maleic acid anhydride content of from 0,01-15 wt.%, in particular 0,02-10 wt.%, preferably 0,05-8 wt.%, particularly preferably 0,5-5 wt.%, based on the polyolefin polymer or the mixtures thereof.

8. The welding method according to one of claims 1 to 7, **characterized in that** the maleic acid anhydride groups of the polyolefin polymer are reacted at least in part with amines, in particular aliphatic amines, preferably aliphatic diamines, such as hexamethylenediamine, preferably 5-100 mol.%, in particular 10-80 mol.%, more preferably 20-70 mol.%, of the maleic acid anhydride groups of the polymer according to the invention or the mixture.

9. The welding method according to one of claims 1 to 8, **characterized in that**, in addition to the maleic acid anhydride-grafted polyolefin polymer, the primer contains at least one additional polymer which is compatible with at least one of the two plastics materials to be welded.

10. An object produced in accordance with a welding method according to one of claims 1-9.

11. The use of a primer, as **characterized in** one of claims 1-9, for welding two different polyolefin plastics materials.

**Revendications**

1. Procédé de soudage de deux plastiques en polyoléfine différents à l'aide d'un apprêt, l'apprêt contenant au moins un polymère de polyoléfine greffé par l'anhydride d'acide maléique.

2. Procédé de soudage selon la revendication 1, caractérisé en que les plastiques en polyoléfine contiennent des polymères polyoléfiniques sélectionnés dans le groupe constitué d'homopolymères de poly-alpha-oléfine à base d'éthène, de propène et/ou de butène, en particulier d'homopolymères d'éthène ou de propène, et de copolymères de poly-alpha-oléfine à base d'éthène, de propène, de 1-butène, de 1-hexène, et de 1-octène, en particulier de copolymères d'éthylène / d'alpha-oléfine et de propylène / d'alpha-oléfine, de préférence de copolymères d'éthylène ou de propylène avec du 1-butène, du 1-hexène, du 1-octène, ou une combinaison de ceux-ci.

3. Procédé de soudage selon la revendication 1 ou 2, **caractérisé en ce que** le premier partenaire d'assemblage est un plastique de polyéthylène, en particulier un plastique de polyéthylène HD, de polyéthylène MD, de polyéthylène LD, de polyéthylène UHMW ou de polyéthylène LLD, et le second partenaire d'assemblage est un plastique de polypropylène.

**4.** Procédé de soudage selon l'une des revendications 1 à 3, **caractérisé en ce que** l'au moins un polymère de polyoléfine greffé par l'anhydride d'acide maléique est sélectionné parmi le polyéthylène greffé par l'anhydride d'acide maléique ou le polypropylène greffé par l'anhydride d'acide maléique.

**5.** Procédé de soudage selon l'une des revendications 1 à 4, **caractérisé en ce que** l'apprêt contient un mélange de polyoléfines greffées par l'anhydride d'acide maléique, en particulier un mélange d'au moins un polyéthylène greffé par l'anhydride d'acide maléique et au moins un polypropylène greffé par l'anhydride d'acide maléique.

**6.** Procédé de soudage selon la revendication 5, **caractérisé en ce que** l'au moins le rapport des différents polymères de polyoléfine greffés par l'anhydride d'acide maléique, en particulier le rapport entre le polyéthylène greffé par l'anhydride d'acide maléique et le polypropylène greffé par l'anhydride d'acide maléique est de 0.2:1 à 20:1, en particulier de 0.5:1 à 10:1, de préférence de 1:1 à 5:1, de manière particulièrement préférée 1.5:1 à 3:1.

**7.** Procédé de soudage selon l'une des revendications 1 à 6, **caractérisé en ce que** l'au moins une polyoléfine greffée par l'anhydride d'acide maléique ou son mélange a une teneur en anhydride d'acide maléique de 0,01 à 15 % en poids, en particulier de 0,02 à 10 % en poids, de préférence de 0,05 à 8 % en poids, de manière particulièrement préférée de 0,5 à 5 % en poids par rapport au polymère de polyoléfine ou à ses mélanges.

**8.** Procédé de soudage selon l'une des revendications 1 à 7, **caractérisé en ce que** les groupes d'anhydride d'acide maléique du polymère de polyoléfine sont mis en réaction, au moins partiellement, avec des aminés, en particulier des amines aliphatiques, de préférence des diamines aliphatiques, telles que l'hexaméthylènediamine, de préférence à raison de 5 à 100 % en moles, en particulier de 10 à 80 % en moles, de préférence de 20 à 70 % en moles des groupes d'anhydride d'acide maléique du polymère selon l'invention ou du mélange.

**9.** Procédé de soudage selon l'une des revendications 1 à 8, **caractérisé en ce que** l'apprêt contient, en plus du polymère de polyoléfine greffé par l'anhydride d'acide maléique, au moins un autre polymère, lequel est compatible à au moins l'un des deux plastiques à souder.

**10.** Objet fabriqué selon un procédé de soudage selon l'une des revendications 1 à 9.

**11.** Utilisation d'un apprêt, telle que **caractérisée** dans l'une des revendications 1 à 9, pour le soudage de deux plastiques de polyoléfines différents.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP S6021249 A

**In der Beschreibung aufgeführte Nicht-Patentliteratur**

- **CHARLES M. HANSEN.** Hansen Solubility Parameters: A User's Handbook. Taylor & Francis Group, 2007